# EUROPEAN PATENT APPLICATION

(11) **EP 3 316 452 A1**
(43) Date of publication of application: **02.05.2018**
(21) Application number: 17198064.2
(22) Date of filing: 24.10.2017
(51) Int. Cl.: H02K 1/27, H02K 7/04

(54) **ELECTRIC ROTOR AND ELECTRIC COMPRESSOR**

(30) Priority: 27.10.2016 JP 2016210860
(71) Applicant: MITSUBISHI HEAVY INDUSTRIES THERMAL SYSTEMS, LTD., Tokyo 108-8215 (JP)
(72) Inventor: ESAKI, Ikuo, TOKYO, 108-8215 (JP); MIURA, Shigeki, TOKYO, 108-8215 (JP); SATO, Hajime, TOKYO, 108-8215 (JP); OGAWA, Makoto, TOKYO, 108-8215 (JP); UNO, Masanari, TOKYO, 108-8215 (JP); SHIMAYA, Hirofumi, TOKYO, 108-8215 (JP)
(74) Representative: Cabinet Beau de Loménie

(57) **Abstract**

An electric rotor includes an iron core (26), the iron core (26) being fixed to a rotary shaft such that axes (O1) of the iron core (26) and the rotary shaft are coaxially disposed with each other, a plurality of magnets (27) respectively inserted into a plurality of magnet insertion holes (28) formed to penetrate the iron core (26) along the axis (O1), and rivets (30) respectively inserted into a plurality of rivet holes (29) formed to penetrate the iron core (26) along the axis (01). The rivet (30) includes a rivet body (30a) which is inserted into the rivet hole (29) and a pair of clinched portions (30b) which is formed by clinching opposite end portions thereof so that the plurality of steel plates integrally pressed and fixed. The clinched portions (30b) overlap the magnet (27) in the axis (O1) direction such that the magnet (27) is held by the clinched portion (30b).

## Description

### BACKGROUND OF THE INVENTION

### Field of the Invention

The present invention relates to an electric rotor and an electric compressor.

### Description of Related Art

For example, a compressor for compressing a fluid such as a refrigerant gas is provided in an air conditioner, a refrigerator, or the like. In addition, as this kind of compressor, an electric compressor is widely used, which includes a cylindrical case, an electric rotor (electric motor) which is accommodated in the case, and a compression mechanism which is driven by the electric rotor in the case (for example, refer to Patent Document 1).

More specifically, in the kind of electric compressor, for example, the electric rotor and the compression mechanism are accommodated to be sealed in the case, and a suction pipe for supplying a fluid such as a refrigerant gas to the compression mechanism through an accumulator or the like is connected to the compression mechanism.

Meanwhile, the electric motor includes a stator which is fixed to an inner peripheral surface of the case and a rotor (electric rotor) which is disposed inside the stator and supplies power to the stator to rotate around an axial center/axis.

The stator is configured by winding a plurality of electric wires around a cylindrical core formed by laminating a plurality of thin magnetic steel plates through a plurality of slots provided at predetermined intervals therebetween in a circumferential direction of the cylindrical core. A coil end, which is an end portion of a coil bundle, is provided on each of the upper end and the lower end of the stator.

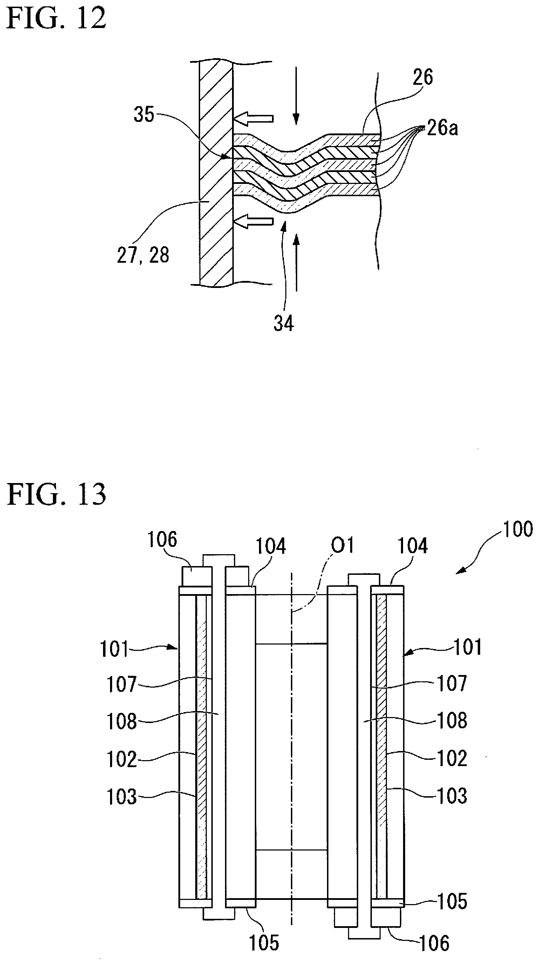

For example, as shown in FIG. 13, a rotor 100 includes an iron core 101 which is formed by laminating a plurality of thin magnetic steel plates, and a plurality of (for example, four, six, or the like) permanent magnets 102 are configured to be embedded in the iron core 101 in an axis O1 direction at predetermined intervals in a circumferential direction thereof. In addition, in the iron core 101, a plurality of permanent magnet insertion hole 103 are formed to penetrate the iron core 101 in the axis O1 direction at predetermined positions, and the permanent magnets 102 are inserted into the permanent magnet insertion hole 103 to be integrally embedded.

In addition, a rotary shaft penetrates the rotor 100 at the center of the iron core 101 to be fixed, and an upper end plate 104 on an upper end of the iron core 101 and a lower end plate 105 on a lower end thereof are disposed to overlap the permanent magnet insertion holes 103 in the axis O1 direction in up and down direction. A counterweight (balance weight) 106 for suppressing runout of the rotor 100 when an electric motor is driven is attached to the upper end side or the lower end side of the iron core 101.

Rivet holes 107 which extend in the axis O1 direction to communicate with each other are formed to penetrate the iron core 101, the upper end plate 104, the lower end plate 105, and the counterweight 106. Rivets 108 are disposed to be inserted into the rivet holes 107 and the upper end portions and the lower end portions of the rivets 108 are clinched so that the upper end plate 104, the lower end plate 105, and the counterweight 106 are pressed and fixed to the upper end side and the lower end side of the iron core 101.

In addition, the upper end plate 104 and the lower end plate 105 fixed by the clinched portions of the rivets 108 are pressed, and thus, a state where the permanent magnets 102 inserted into the permanent magnet insertion holes 103 are embedded in the rotor 101 is maintained.

[Patent Document 1] Japanese Unexamined Patent Application, First Publication No. 2009-240146

### SUMMARY OF THE INVENTION

However, in the electric rotor and the electric compressor of the related art, it is desirable to reduce the number of parts to decrease a cost. For example, it is strongly desired to eliminate the end plates for fixing the permanent magnets and to cause other members to bear the functions of the end plates.

According to an aspect of the present invention, there is provided an electric rotor, including: an iron core which is formed by laminating a plurality of steel plates in an axis direction, the iron core being fixed to a rotary shaft such that axes of the iron core and the rotary shaft are coaxially disposed with each other; a plurality of magnets embedded in the iron core in a manner of being respectively inserted into a plurality of magnet insertion holes formed to penetrate the iron core along the axis; and rivets for integrally fixing at least the plurality of steel plates, the rivets being respectively inserted into a plurality of rivet holes formed to penetrate the iron core along the axis, in which the rivet includes a rivet body which is disposed to be inserted into the rivet hole and a pair of clinched portions which is formed by clinching opposite end portions thereof so that the plurality of steel plates are integrally pressed and fixed, and wherein the clinched portions are provided so as to overlap in the axis direction with the magnet inserted into the magnet insertion hole and are configured such that the magnet is held by the clinched portions.

According to another aspect of the present invention, there is provided an electric rotor, including: an iron core which is formed by laminating a plurality of steel plates in an axis direction, the iron core being fixed to a rotary shaft such that axes of the iron core and the rotary shaft are coaxially disposed with each other; a plurality of magnets embedded in the iron core in a manner of being respectively inserted into a plurality of magnet insertion holes formed to penetrate the iron core along the axis; a counterweight which is integrally provided in at least one of one end portion and the other end portion of the iron core in the axis direction; and rivets for integrally fixing the plurality of steel plates and the counterweight, the rivets being respectively inserted into a plurality of rivet holes formed to penetrate the iron core and the counterweight along the axis, in which the counterweight is provided so as to overlap in the axis direction with the magnet inserted into the magnet insertion hole and is configured such that the magnet is held by the counterweight.

According to still another aspect of the present invention, there is provided an electric rotor, including: an iron core which is formed by laminating a plurality of steel plates in an axis direction, the iron core being fixed to a rotary shaft such that axes of the iron core and the rotary shaft are coaxially disposed with each other; a plurality of magnets embedded in the iron core in a manner of being respectively inserted into a plurality of magnet insertion holes formed to penetrate the iron core along the axis; rivets for integrally fixing at least the plurality of steel plates, the rivets being respectively inserted into a plurality of rivet holes formed to penetrate the iron core along the axis; and a counterweight which is integrally provided in at least one of one end portion and the other end portion of the iron core in the axis direction, wherein the rivet includes a rivet body which is disposed to be inserted into the rivet hole and a pair of clinched portions which is formed by clinching opposite end portions thereof so that the plurality of steel plates are integrally pressed and fixed, and wherein at least one of the counterweight and the clinched portion of the rivet is provided so as to overlap in the axis direction with the magnet inserted into the magnet insertion hole and is configured such that all the magnets are held by the at least one of the counterweight and the clinched portion of the rivet.

According to still another aspect of the present invention, there is provided an electric rotor, including: an iron core which is formed by laminating a plurality of steel plates in an axis direction, the iron core being fixed to a rotary shaft such that axes of the iron core and the rotary shaft are coaxially disposed with each other; a plurality of magnets embedded in the iron core in a manner of being respectively inserted into a plurality of magnet insertion holes formed to penetrate the iron core along the axis, in which a hole for swaging is provided in at least one of one end portion and the other end portion of the iron core in the axis direction and in the vicinity of the magnet insertion hole, and wherein a swaged portion which presses the steel plate between the hole for swaging and the magnet inserted into the magnet insertion hole to the magnet so as to fix/hold the magnet is provided.

According to still another aspect of the present invention, there is provided an electric rotor, including: an iron core which is formed by laminating a plurality of steel plates in an axis direction, the iron core being fixed to a rotary shaft such that axes of the iron core and the rotary shaft are coaxially disposed with each other; and a plurality of magnets embedded in the iron core in a manner of being respectively inserted into a plurality of magnet insertion holes formed to penetrate the iron core along the axis, in which an auto clamp formed by fitting recessed and projecting portions formed on the plurality of steel plates into each other is provided in the vicinity of the magnet insertion hole of the iron core, the auto clamp being collapsed and deformed by the pressurization to the iron core in the axis direction so as to provide a bulging portion pressing the magnet to fix/hold the magnet.

According to still another aspect of the present invention, there is provided an electric compressor, including: an electric motor which is accommodated in a case; and a compression mechanism which is driven by the electric motor in the case, in which the electric motor includes a stator which is fixed to an inner peripheral surface of the case and an electric rotor which is disposed inside the stator, the electric rotor supplying power to the stator and rotating, and the electric rotor is any one of the above-described electric rotors.

In the electric rotor of the present invention and the electric compressor having this, it is possible to fix the magnet of the electric rotor in a state where the end plate of the related art is eliminated. Accordingly, the number of parts of the electric rotor and the electric motor is reduced, and it is possible to realize a decrease in a cost.

### BRIEF DESCRIPTION OF THE DRAWINGS

FIG. 1 is a longitudinal sectional view showing an example of an electric compressor according to the present invention.
FIG. 2 is a cross sectional view showing an example of a compression mechanism of the electric compressor according to the present invention.
FIG. 3 is a longitudinal sectional view showing an electric rotor according to a first embodiment of the present invention.
FIG. 4 is a view taken along line X1-X1 of FIG. 3 and a plan view when the electric rotor according to the first embodiment of the present invention is viewed from the lower surface side.
FIG. 5 is a plan view when a modification example of the electric rotor according to the first embodiment of the present invention is viewed from the lower surface side.
FIG. 6 is a longitudinal sectional view showing an electric rotor according to a second embodiment of the present invention.
FIG. 7 is a view taken along line X1-X1 of FIG. 6 and a plan view when the electric rotor according to the second embodiment of the present invention is viewed from the lower surface side.
FIG. 8 is a longitudinal sectional view showing an electric rotor according to a third embodiment of the present invention.
FIG. 9 is a view taken along line X1-X1 of FIG. 8 and a plan view when the electric rotor according to the third embodiment of the present invention is viewed from the lower surface side.
FIG. 10 is a longitudinal sectional view showing an electric rotor according to a fourth embodiment of the present invention.
FIG. 11 is a view taken along line X1-X1 of FIG. 10 and a plan view when the electric rotor according to the fourth embodiment of the present invention is viewed from the lower surface side.
FIG. 12 is sectional view showing an auto clamp mechanism included in an iron core of the electric rotor according to the fourth embodiment of the present invention.
FIG. 13 is a longitudinal sectional view showing an electric rotor of the related art.

### DETAILED DESCRIPTION OF THE INVENTION

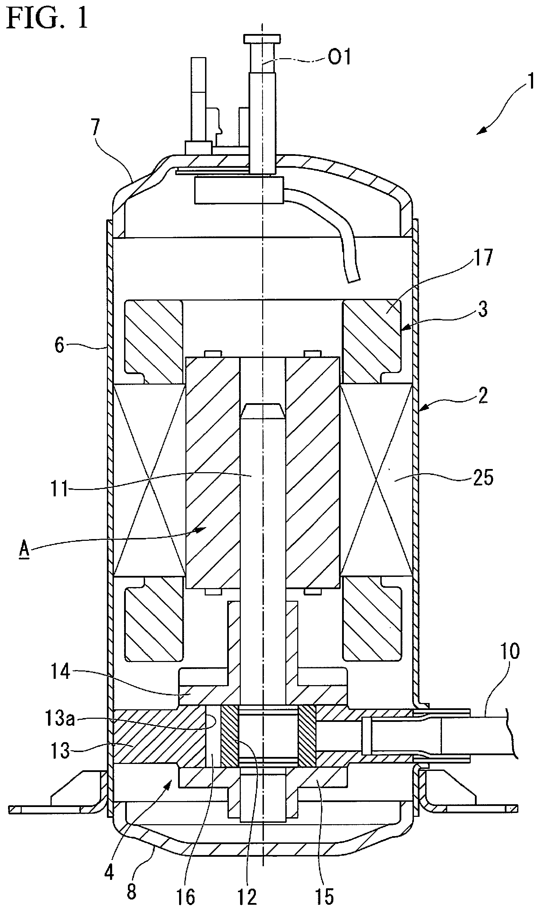

Hereinafter, an electric rotor and an electric compressor according to an embodiment of the present invention will be described with reference to FIGS. 1 to 5.

First, For example, the electric compressor of the present embodiment is included in an air conditioner, a refrigerator, or the like to compress a fluid such as a refrigerant gas by driving of an electric motor.

Specifically, an electric compressor 1 of the present embodiment is a sealed electric rotary compressor, and as shown in FIG. 1, is configured to include a cylindrical case 2, an electric motor 3 which is accommodated in the case 2, and a compression mechanism 4 which is driven by the electric motor 3 in the case 2. For example, the electric compressor 1 is incorporated in a refrigerant circuit including a condenser, an expansion valve, an evaporator, or the like, and compresses a refrigerant which flows through a pipe of the refrigerant circuit.

The case 2 includes a tubular body 6, an upper cover 7 which is attached to an upper end of the body 6, and a lower cover 8 which is attached to a lower end of the body 6 and is configured such that the electric motor 3 and the compression mechanism 4 are accommodated in a sealed space inside the case 2. For example, a suction pipe 10 through which a refrigerant gas is supplied to the compression mechanism 4 via an accumulator is connected to the body 6.

The compression mechanism 4 includes a piston rotor 12 which is eccentrically attached to the other end portion opposite to one end portion of a rotary shaft 11, a cylinder 13 in which a piston rotor 12 is disposed, and an upper bearing 14 and a lower bearing 15 which rotatably support the rotary shaft 11 around an axial center (axis) O1. The compression mechanism 4 sequentially decreases or increases a volume of the compression chamber 16 formed inside the cylinder 13 according to a rotation of the piston rotor 12, and decreases the volume so as to compress a refrigerant gas.

The piston rotor 12 has a shape which is eccentric to the axial center O1 of the rotary shaft 11 and is provided to be fitted to an outer periphery of the rotary shaft 11. The piston rotor 12 is inserted into an eccentric portion of the rotary shaft 11 between the upper bearing 14 and the lower bearing 15 and is provided to pivot around the axial center O1 of the rotary shaft 11.

The cylinder 13 is provided such that a portion of an outer peripheral surface of the piston rotor 12 comes into sliding contact with a cylindrical inner peripheral surface of the cylinder 13. An axial center of an inner peripheral surface 13a of the cylinder 13 is disposed to be coaxial with the axial center O1 of the rotary shaft 11 and a space inside the inner peripheral surface 13a of the cylinder 13 is sealed by the upper bearing 14 and the lower bearing 15 to form the compression chamber 16.

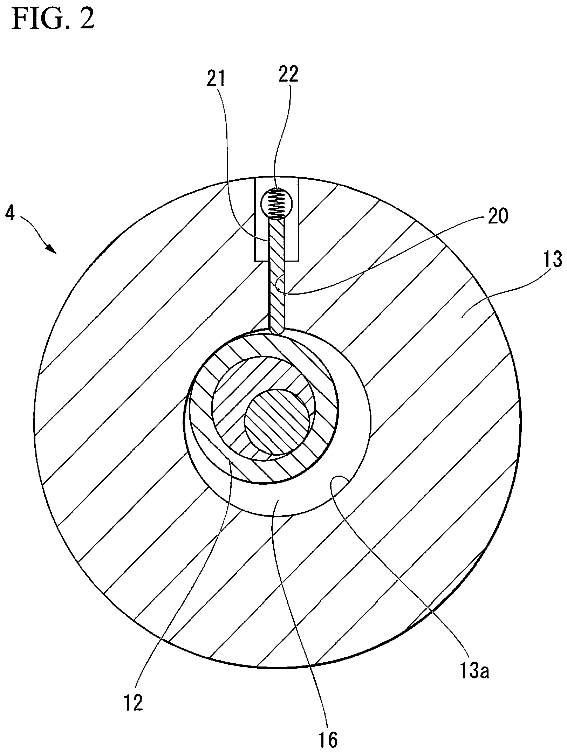

As shown in FIG. 2, a slot 20 penetrating the cylinder 13 in the radial direction at one location in the circumferential direction is formed in the cylinder 13. A plate-shaped blade 21 is inserted into the slot 20. A base end of the blade 21 is pressed/urged inward in the radial direction by a coil spring 22. A tip of the blade 21 is always pressed to the outer peripheral surface of the piston rotor 12 by a pressing force caused by the coil spring 22 and a pressure caused by a compressed refrigerant inside the case 2, and thus, the blade 21 protrudes and retracts/moves forward or backward with respect to the inside of the cylinder 13 along the slot 20 in accordance with the piston rod 12.

The blade 21 is formed to have the same height as the dimension of the piston rotor 12 in the axial direction, and thus, as shown in FIG. 2, the blade 21 divides the compression chamber 16 having a crescent-shaped cross section formed between the inner peripheral surface 13a of the cylinder 13 and the outer peripheral surface of the piston rotor 12 into two. Accordingly, the volumes of the two spaces divided by the blade 21 are proportionally distributed according to a rotation angle of the piston rotor 12.

As shown in FIG. 1, the electric motor 3 of the present embodiment is configured to include a stator 25 which is fixed to the inner peripheral surface of the case 2 and a rotor (electric rotor) A which is disposed inside the stator 25 and supplies power to the stator 25 to rotate. A coil end 17, which is an end portion of a coil bundle, is provided on each of the upper end and the lower end of the stator 25.

The stator 25 is configured by winding a plurality of electric wires around a cylindrical core formed by laminating a plurality of thin magnetic steel plates through a plurality of slots provided at predetermined intervals therebetween in a circumferential direction of the cylindrical core.

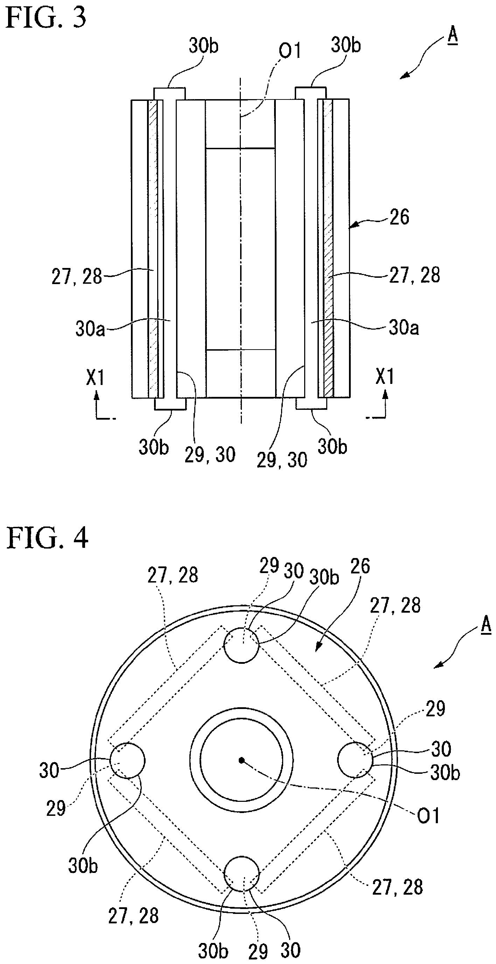

Meanwhile, as shown in FIGS. 3 and 4, the rotor (electric rotor) A of the present embodiment includes an iron core 26 which is formed by laminating a plurality of thin magnetic steel plates. In addition, permanent magnets 27 (four permanent magnets 27 in the present embodiment) are each inserted into a plurality of (four in the present embodiment) magnet insertion holes 28 which are formed to penetrate the iron core 26 at predetermined intervals in a circumferential direction of the iron core 26, the permanent magnets 27 are embedded in the iron core 26 such that magnetic poles face the circumferential direction, and thus, the rotor A is configured. A rotary shaft 11 penetrates the center portion of the iron core 26 and is fixed to the iron core 26.

In the rotor A of the present embodiment, rivets 30 are disposed to be inserted into rivet holes 29 formed to penetrate the iron core 26, and the upper end portions and the lower end portions of the rivets 30 are clinched to integrally fix the plurality of magnetic steel plates of the iron core 26.

Here, in the electric rotor A of the present embodiment, each rivet 30 includes a rivet body 30a which is inserted into the rivet hole 29 and a pair of clinched portions 30b which is formed on an upper end portion side and a lower end portion side of the rivet body 30a and presses and fixes an upper end portion side and a lower end portion side (one end portion side and the other end portion side in the axis O1 direction of the rotor A) of the iron core 26. At least a portion of the clinched portion 30b of the rivet 30 is provided to overlap the magnet insertion hole 28 and the permanent magnet 27 in the axis O1 direction so that the permanent magnet 27 abuts on the clinched portion 30b, and thus, the permanent magnet 27 is fixed/held.

Accordingly, in the electric rotor A and the electric compressor 1 of the present embodiment, the permanent magnets 27 can be fixed/held by the clinched portions 30b of the rivets 30, and thus, it is possible to eliminate the end plates 104 and 105 for fixing the permanent magnets of the related art. Therefore, the number of parts of the electric rotor A, the electric motor 3, and the electric compressor 1 is reduced, and thus, it is possible to realize a decrease in a cost.

Here, in the present embodiment, the electric rotor A and the electric motor 3 are configured without providing a counterweight (balance weight) for suppressing runout of the rotor A when the electric motor 3 is driven. However, it is needless to say that the counterweight may be provided.

In the case where the counterweight is not provided, a plurality of through-holes which penetrate the electric rotor A of the electric motor 3 in the axis O1 direction to communicate with the compression chamber 16 may be formed, and thus, due to the formations of the plurality of through-holes, the runout of the rotor A is suppressed when the electric motor 3 is driven. That is, the through-holes may be provided in the iron core 26, and thus, a function similar to that of the counterweight which generates a centrifugal force in the same direction as a centrifugal force caused by the piston rotor 12 is exerted. In addition, the number of the laminated magnetic steel plates of the rotor A or the like may be adjusted to exert the function similar to that of the counterweight.

Hereinbefore, the first embodiment of each of the electric rotor and the electric compressor according to the present invention is described. However, the present invention is not limited to the first embodiment and can be appropriately changed within a scope which does not depart from the appended claims.

For example, in the present embodiment, the case where the electric rotor A is included in the electric compressor 1 is described. However, the electric rotor A according to the present invention is not limited to be applied to the compressor 1.

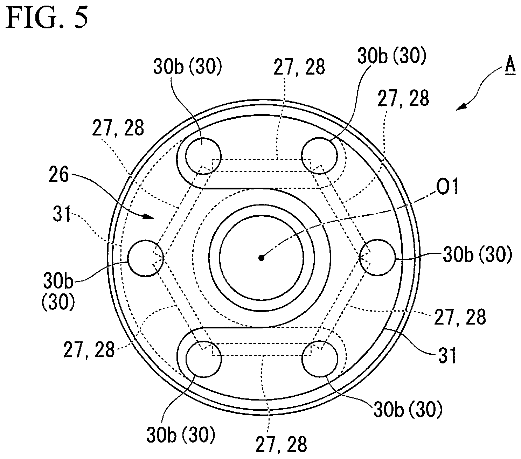

In addition, in the present embodiment, the electric rotor A is the four-electrode rotor (the rotor having four magnets 27). However, as shown in FIG. 5, the electric rotor A may be a six-electrode rotor (a rotor having six magnets 27), and the number of the magnets 27 is not particularly limited.

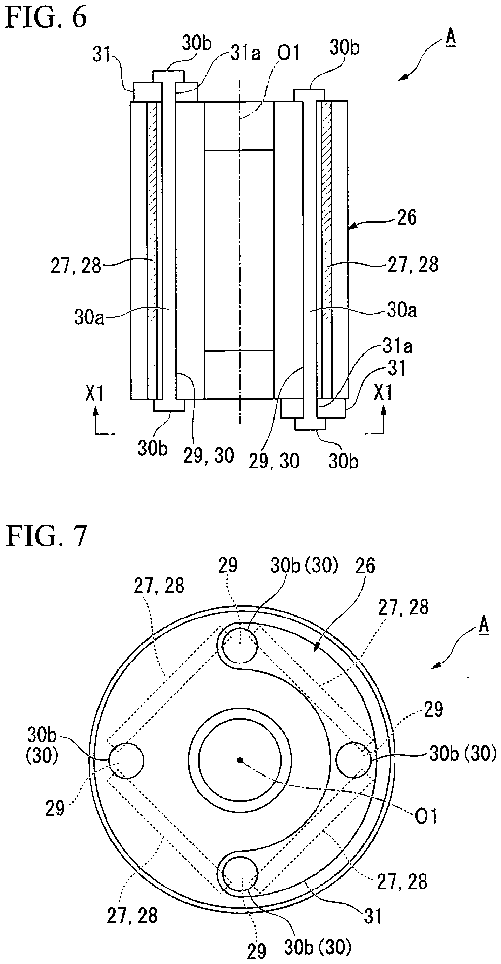

Next, an electric rotor and an electric compressor according to a second embodiment of the present invention will be described with reference to FIGS. 6 and 7 (FIGS. 1 and 2). Here, similarly to the first embodiment, also in the present embodiment, the case where the electric rotor and the electric compressor according to the present invention are included in an air conditioner, a refrigerator, or the like will be described. Accordingly, in the present embodiment, the same reference numerals are assigned to the configurations similar to those of the first embodiment, and detail descriptions thereof are omitted.

Similarly to the first embodiment, as shown in FIG. 1, the electric compressor 1/the electric motor 3 of the present embodiment are configured to include the stator 25 which is fixed to the inner peripheral surface of the case 2 and the rotor A which is disposed inside the stator 25 and supplies power to the stator 25 to rotate.

Meanwhile, in the rotor (electric rotor) A of the present embodiment, as shown in FIGS. 6 and 7, a counterweight (balance weight) 31 for suppressing the runout of the rotor A when the electric motor 3 is driven is integrally attached to each of the upper end portion side and the lower end portion side of the iron core 26 at a predetermined position thereof.

Here, a rivet hole 31a is formed in each counterweight 31, the rivet body 30a is inserted into the rivet hole 29 of the rotor A and the rivet hole 31a of the counterweight 31, and each of the upper end portion and the lower end portion of the rivet 30 is clinched. Accordingly, each counterweight 31 is integrally attached to the rotor A.

Therefore, in the electric rotor A of the present embodiment, in this case, each counterweight 31 pressed and fixed by the clinched portions 30b of the rivets 30 is provided to overlap the magnet insertion hole 28 and the permanent magnet 27 in the axis O1 direction. Accordingly, the permanent magnets 27 are fixed/held by abutting to the counterweight 31.

Therefore, in the electric rotor A and the electric compressor 1 of the present embodiment, the counterweights 31 are fixed at predetermined positions of the rotor A by the clinched portions 30b of the rivets 30, and it is possible to fix/hold the permanent magnets 27 by the counterweights 31. Accordingly, similarly to the first embodiment, it is possible to eliminate the end plates 104 and 105 for fixing the permanent magnets of the related art. Thereby, the number of parts of the electric rotor A, the electric motor 3, and the electric compressor 1 is reduced, and it is possible to realize a decrease in a cost.

Hereinbefore, the second embodiment of the electric motor and the compressor according to the present invention is described. However, the present invention is not limited to the second embodiment, includes a modification example of the first embodiment, and can be appropriately modified within a scope which does not depart from the appended claims.

For example, as described in the first embodiment, as shown in FIG. 5, the electric rotor A may be a six-electrode rotor (a rotor having six magnets 27), and the number of the magnets 27 is not particularly limited. In this way, in the case where the number of the magnets 27 increases or the like, it is considered that the runout of the rotor A when the electric motor 3 is driven can be reliably suppressed by appropriately and partially changing the shape and the thickness of the counterweight 31 provided on the upper end portion side or the lower end portion side.

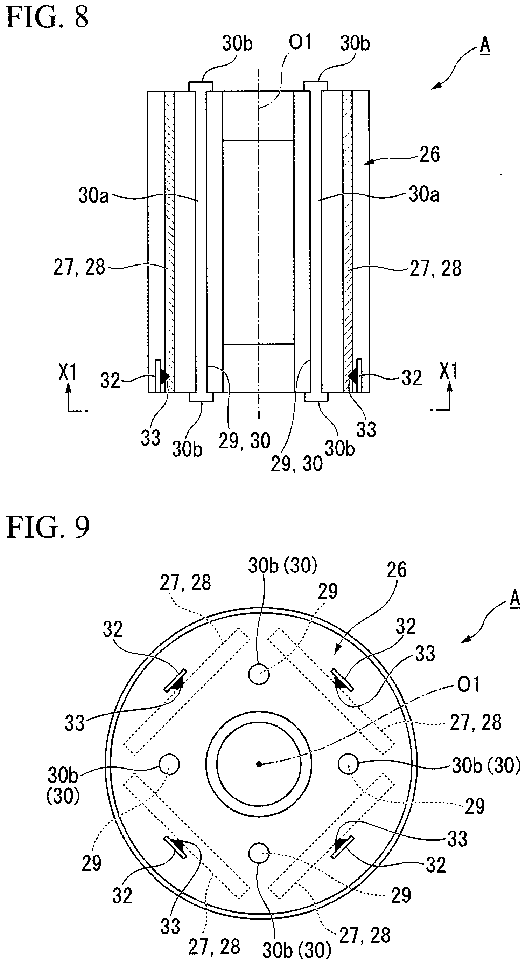

Next, an electric rotor and a compressor according to a third embodiment of the present invention will be described with reference to FIGS. 8 and 9 (FIGS. 1 and 2). Here, similarly to the first and second embodiments, also in the present embodiment, the case where the electric rotor and the compressor according to the present invention are included in an air conditioner, a refrigerator, or the like will be described. Accordingly, in the present embodiment, the same reference numerals are assigned to the configurations similar to those of the first and second embodiments, and detail descriptions thereof are omitted.

Similarly to the first and second embodiments, as shown in FIG. 1, the electric compressor 1/the electric motor 3 of the present embodiment are configured to include the stator 25 which is fixed to the inner peripheral surface of the case 2 and the rotor A which is disposed inside the stator 25 and is rotated by supplying power to the stator 25.

In the rotor (electric rotor) A of the present embodiment, as shown in FIGS. 8 and 9, the rivets 30 are disposed to be inserted into the rivet holes 29 formed to penetrate the iron core 26, the upper end portions and the lower end portions of the rivets 30 are clinched, and the plurality of magnetic steel plates are formed to be integrally fixed.

Meanwhile, in the rotor A of the present embodiment, the holes 32 for swaging which extend in the axis O1 direction from the upper end portion and/or the lower end portion of the rotor A are provided on the upper end portion side and/or the lower end portion side of the rotor A. Each of the holes 32 for swaging is formed in the vicinity of each of the plurality of magnet insertion holes 28.

The upper end portions and the lower end portions of the rivets 30 are clinched to integrally fix the plurality of magnetic steel plates. Meanwhile, in a state where the permanent magnet 27 is inserted into each magnet insertion hole 28 to be embedded therein, for example, a swaging tool is inserted into the hole 32 for swaging to apply a swaging force to the magnetic steel plates of the iron core 26 from the hole 32 for swaging toward the permanent magnet 27 side in the vicinity of the hole 32 for swaging. Accordingly, the magnetic steel plates of the iron core 26 are deformed to be firmly fixed to the permanent magnet 27, and each permanent magnet 27 can be pressed and fixed by a swaged portion 33 of the magnetic steel plates.

Therefore, in the electric rotor A and the electric compressor 1 of the present embodiment, the holes 32 for swaging are provided in the rotor A, the swaging force is applied to the permanent magnets 27 from the iron core 26 using the holes 32 for swaging, and the respective permanent magnets 27 can be pressed and fixed. Accordingly, similarly to the first and second embodiments, it is possible to eliminate the end plates 104 and 105 for fixing the permanent magnets of the related art. Thereby, the number of parts of the electric rotor A, the electric motor 3, and the electric compressor 1 is reduced, and it is possible to realize a decrease in a cost.

Hereinbefore, the third embodiment of the electric motor and the compressor according to the present invention is described. However, the present invention is not limited to the third embodiment, includes modification examples of the first and second embodiment, and can be appropriately modified within a scope which does not depart from the appended claims.

For example, the permanent magnets 27 may be fixed by appropriately and selectively combining the configurations of the present embodiment and the configurations of the first and second embodiments.

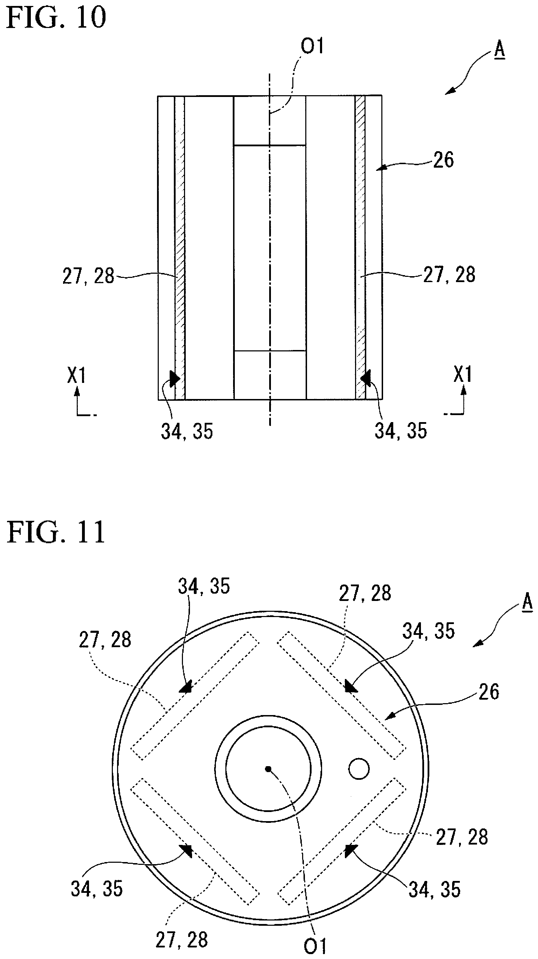

Next, an electric rotor and a compressor according to a fourth embodiment of the present invention will be described with reference to FIGS. 10 to 12 (FIGS. 1 and 2). Here, similarly to the first to third embodiments, also in the present embodiment, the case where the electric rotor and the compressor according to the present invention are included in an air conditioner, a refrigerator, or the like will be described. Accordingly, in the present embodiment, the same reference numerals are assigned to the configurations similar to those of the first to third embodiments, and detail descriptions thereof are omitted.

Similarly to the first to third embodiments, the electric compressor 1/the electric motor 3 of the present embodiment are configured to include the stator 25 and the rotor A.

Meanwhile, as shown in FIG. 12 (FIGS. 10 and 11), in the rotor (electric rotor) A of the present embodiment, embossed portions (hereinafter, referred to as "auto clamps") 34 are provided in the vicinities of the magnet insertion holes 28 of the lower end portion side (and/or the upper end portion side) of the iron core 26. That is, thin magnetic steel plates 26a to which the auto clamps 34 formed to be uneven in the vicinities of the magnet insertion holes 28 are embossed are used on the lower end portion side (and/or the upper end portion side) of the iron core 26. In addition, the embossed protrusions are fitted to be pressurized to recessed portions on the rear surface of the protrusions in the thin magnetic steel plates 26a of adjacent layers to overlap each other. Accordingly, upper and lower steel plates 26a are fixed to each other to be laminated to have a predetermined thickness, and thus, the iron core 26 and the rotor A are formed.

In the electric rotor A of the present embodiment, after the permanent magnets 27 are inserted into the magnet insertion holes 28 of the iron core 26 fixed to be laminated, the iron core 26 is again pressurized in the lamination direction by a re-pressurization force which is larger than the pressure when the iron core 26 is fixed to be laminated, by the plurality of auto clamps 34.

In this case, since the auto clamps 34 are provided in the vicinities of the magnet insertion holes 28, the auto clamps 34 are deeply fitted to each other by the re-pressurization force, and bulging portions 35 are generated over the entire region in the lamination direction on the wall surfaces of the magnet insertion holes 28 positioned in the iron core 26 in the vicinities of the auto clamps 34. In addition, the permanent magnets 27 are pressed by the bulging portions 35 and thus, the permanent magnets 27 are pressed and fixed into the magnet insertion holes 28.

Accordingly, the electric rotor A and the electric compressor 1 of the present embodiment, the permanent magnets 27 are pressed and fixed by the auto clamps (auto clamp mechanism) 34. Therefore, it is possible to eliminate the end plates 104 and 105 for fixing the permanent magnets of the related art. Thereby, the number of parts of the electric rotor A, the electric motor 3, and the electric compressor 1 is reduced, and it is possible to realize a decrease in a cost.

Hereinbefore, the fourth embodiment of the electric rotor and the electric compressor according to the present invention is described. However, the present invention is not limited to the fourth embodiment, includes modification examples of the first to third embodiments, and can be appropriately modified within a scope which does not depart from the appended claims.

For example, the permanent magnets 27 may be fixed by appropriately and selectively combining the configurations of the present embodiment and the configurations of the first to third embodiments.

While preferred embodiments of the invention have been described and illustrated above, it should be understood that these are exemplary of the invention and are not to be considered as limiting. Additions, omissions, substitutions, and other modifications can be made without departing from the scope of the present invention as defined by the appended claims. Accordingly, the invention is not to be considered as being limited by the foregoing description, and is only limited by the scope of the appended claims.

### EXPLANATION OF REFERENCES

1: electric compressor
2: case
3: electric motor
4: compression mechanism
6: body
7: upper cover
8: lower cover
10: suction pipe
11: rotary shaft
12: piston rotor
13: cylinder
13a: inner peripheral surface
14: upper bearing
15: lower bearing
16: compression chamber
17: coil end
20: slot
21: blade
25: stator
26: iron core
26a: magnetic steel plate (steel plate)
27: permanent magnet (magnet)
28: magnet insertion hole
29: rivet hole
30: rivet
30a: rivet body
30b: clinched portion
31: counterweight
31a: rivet hole
32: hole for swaging
33: swaged portion
34: auto clamp
35: bulging portion
A: electric rotor (rotor)
O1: axis

## Claims

1. An electric rotor (A), comprising:
an iron core (26) which is formed by laminating a plurality of steel plates in an axis (O1) direction, the iron core (26) being fixed to a rotary shaft (11) such that axes of the iron core (26) and the rotary shaft (11) are coaxially disposed with each other;
a plurality of magnets (27) embedded in the iron core (26) in a manner of being respectively inserted into a plurality of magnet insertion holes (28) formed to penetrate the iron core (26) along the axis (O1); and
rivets (30) for integrally fixing at least the plurality of steel plates, the rivets being respectively inserted into a plurality of rivet holes (31a) formed to penetrate the iron core (26) along the axis (O1),
wherein the rivet (30) includes a rivet body (30a) which is disposed to be inserted into the rivet hole (31a) and a pair of clinched portions (30b) which is formed by clinching opposite end portions thereof so that the plurality of steel plates are integrally pressed and fixed, and wherein the clinched portions (30b) are provided so as to overlap in the axis direction with the magnet (27) inserted into the magnet insertion hole (28) and is configured such that the magnet (27) is held by the clinched portion (30b).

2. An electric rotor (A), comprising:
an iron core (26) which is formed by laminating a plurality of steel plates in an axis (O1) direction, the iron core (26) being fixed to a rotary shaft (11) such that axes of the iron core (26) and the rotary shaft (11) are coaxially disposed with each other;
a plurality of magnets (27) embedded in the iron core (26) in a manner of being respectively inserted into a plurality of magnet insertion holes (28) formed to penetrate the iron core (26) along the axis;
a counterweight (31) which is integrally provided in at least one of one end portion and the other end portion of the iron core (26) in the axis direction; and
rivets (30) for integrally fixing the plurality of steel plates and the counterweight (31), the rivets being respectively inserted into a plurality of rivet holes (31a) formed to penetrate the iron core (26) and the counterweight (31) along the axis (O1),
wherein the counterweight (31) is provided so as to overlap in the axis direction with the magnet (27) inserted into the magnet insertion hole (28) and is configured such that the magnet (27) is held by the counterweight (31).

3. An electric rotor (A), comprising:
an iron core (26) which is formed by laminating a plurality of steel plates in an axis (O1) direction, the iron core (26) being fixed to a rotary shaft (11) such that axes of the iron core (26) and the rotary shaft (11) are coaxially disposed with each other;
a plurality of magnets (27) embedded in the iron core (26) in a manner of being respectively inserted into a plurality of magnet insertion holes (28) formed to penetrate the iron core (26) along the axis;
rivets (30) for integrally fixing at least the plurality of steel plates, the rivets being respectively inserted into a plurality of rivet holes (31a) formed to penetrate the iron core (26) along the axis (O1) ; and
a counterweight (31) which is integrally provided in at least one of one end portion and the other end portion of the iron core (26) in the axis direction,
wherein the rivet (30) includes a rivet body (30a) which is disposed to be inserted into the rivet hole (31a) and a pair of clinched portions (30b) which is formed by clinching opposite end portions thereof so that the plurality of steel plates are integrally pressed and fixed, and
wherein at least one of the counterweight (31) and the clinched portion (30b) of the rivet is provided so as to overlap in the axis direction with the magnet (27) inserted into the magnet insertion hole (28) and is configured such that all the magnets (27) are held by the at least one of the counterweight (31) and the clinched portion (30b) of the rivet.

4. An electric rotor (A), comprising:
an iron core (26) which is formed by laminating a plurality of steel plates in an axis (O1) direction, the iron core (26) being fixed to a rotary shaft (11) such that axes of the iron core (26) and the rotary shaft (11) are coaxially disposed with each other; and
a plurality of magnets (27) embedded in the iron core (26) in a manner of being respectively inserted into a plurality of magnet insertion holes (28) formed to penetrate the iron core (26) along the axis,
wherein a hole for swaging (32) is provided in at least one of one end portion and the other end portion of the iron core (26) in the axis direction and in the vicinity of the magnet insertion hole (28) , and wherein a swaged portion (33) which presses the steel plate between the hole for swaging (32) and the magnet (27) inserted into the magnet insertion hole (28) to the magnet (27) so as to fix/hold the magnet (27) is provided.

5. An electric rotor (A), comprising:
an iron core (26) which is formed by laminating a plurality of steel plates in an axis (O1) direction, the iron core (26) being fixed to a rotary shaft (11) such that axes of the iron core (26) and the rotary shaft (11) are coaxially disposed with each other; and
a plurality of magnets (27) embedded in the iron core (26) in a manner of being respectively inserted into a plurality of magnet insertion holes (28) formed to penetrate the iron core (26) along the axis,
wherein an auto clamp (34) formed by fitting recessed and projecting portions formed on the plurality of steel plates into each other is provided in the vicinity of the magnet insertion hole (28) of the iron core (26), the auto clamp (34) being collapsed and deformed by the pressurization to the iron core (26) in the axis direction so as to provide a bulging portion (35) pressing the magnet (27) to fix/hold the magnet (27).

6. An electric compressor (1), comprising:
an electric motor (3) which is accommodated in a case (2) ; and
a compression mechanism (4) which is driven by the electric motor (3) in the case (2),
wherein the electric motor (3) includes a stator (25) which is fixed to an inner peripheral surface of the case (2) and an electric rotor (A) which is disposed inside the stator, the electric rotor supplying power to the stator (25) and rotating, and
wherein the electric rotor is the electric rotor (A) according to any one of claims 1 to 5.
